# EUROPÄISCHE PATENTSCHRIFT

(11) **EP 0 498 911 B1**
(45) Veröffentlichungstag und Bekanntmachung des Hinweises auf die Patenterteilung: **14.12.1994**
(21) Anmeldenummer: 91102089.9
(22) Anmeldetag: 14.02.1991
(51) Int. Cl.: C10L 5/46

(54) **Müllbriketts und Verfahren zu deren Herstellung**
Refuse briquettes and process for making the same
Briquettes de déchets et procédé pour leur fabrication

(43) Veröffentlichungstag der Anmeldung: 19.08.1992
(73) Patentinhaber: Emmerichs, Gerhard, Dipl.-Ing., D-82110 Germering (DE)
(72) Erfinder: Emmerichs, Gerhard, Dipl.-Ing., D-82110 Germering (DE)
(74) Vertreter: Brauns, Hans-Adolf, Dr. rer. nat.

(56) Entgegenhaltungen:
- EP-A- 0 124 827
- EP-A- 0 338 103
- EP-A- 0 373 236
- DE-A- 3 329 771

## Beschreibung

Die Erfindung befaßt sich mit Briketts aus Hausmüll, bei denen der Hausmüll in einer deponierfähigen Form vorliegt, und wobei die Hausmüllbriketts einer umweltfreundlichen Verbrennung unter Gewinnung von Wärmeenergie unterworfen werden können. Die Erfindung betrifft auch ein Verfahren zur Herstellung solcher Hausmüllbriketts.

Die Beseitigung und Entsorgung von Hausmüll wird zunehmend problematischer und stellt Städte und Gemeinden vor große Probleme. Die zunehmende Tendenz, Lebensmittel und Gebrauchsgegenstände aufwendig zu verpacken, aber auch die Notwendigkeit, bestimmte Lebensmittel wie Milch oder Milchprodukte oder Fleisch hygienisch und zweckmäßig zu verpacken, trägt dazu bei, daß die Mengen zu entsorgenden Hausmülls erheblich sind und auch bei einem zunehmenden Umweltbewußtsein der Bevölkerung die Mengen an Hausmüll auch in Zukunft sehr groß sein werden.

Hausmüll besteht zu einem erheblichen Teil aus verbrennbarem Material wie Papier, Pappe, kompostierbarem Material, das auch verbrennbar ist, und Kunststoffen, die ebenfalls verbrennbar sind, allerdings mit der Gefahr einer erheblichen Umweltbelastung durch die bei der Verbrennung entstehenden Schadstoffe. Daneben enthält Hausmüll noch anorganische Stoffe, insbesondere Glas und Metalle.

Bei der herkömmlichen Müllentsorgung wird der Hausmüll entweder in Mülldeponien gelagert oder einer Müllverbrennung unterworfen. Der zur Verfügung stehende Raum für die Deponien ist aber beschränkt. Darüber hinaus verschandeln solche Deponien das Landschaftsbild und gefährden das Grundwasser. Müllverbrennungsanlagen sind aufwendig und können in der Regel nur an einigen Standorten, die oftmals weit vom anfallenden Hausmüll entfernt sind, errichtet werden. Bei Deponien wie auch bei Müllverbrennungsanlagen muß der Müll in jedem Fall über mehr oder weniger weite Strecken transportiert werden. Dies erhöht die Kosten der Müllentsorgung und ist ebenfalls umweltbelästigend.

Es besteht somit ein erhebliches Bedürfnis, Hausmüll auf eine umweltfreundliche und preiswerte Weise zu entsorgen.

Aufgabe der Erfindung ist es, ein geeignetes Mittel und ein geeignetes Verfahren zur umweltfreundlichen und preiswerten Entsorgung von Hausmüll zur Verfügung zu stellen. Verbunden mit dieser Aufgabe ist, den Hausmüll so zu entsorgen, daß er deponierfähig ist, ohne die Umwelt und insbesondere auch das Grundwasser zu verschmutzen, und in normalen Verbrennungsanlagen, die nicht besonders für eine Müllverbrennung ausgerichtet sein müssen, verbrannt werden kann.

Diese Aufgabe wird durch Müllbriketts gemäß Anspruch 1 gelöst.

Unter Hausmüll wird hier der normale Müll verstanden, der in Städten und Gemeinden in den Haushalten anfällt und normalerweise in die den Haushalten zugeordneten Mülltonnen gefüllt wird. Dieser Hausmüll kann selbstverständlich, in Abhängigkeit von den Größen und Zusammensetzungen der Haushalte und den Lebensgewohnheiten der dem Haushalt angehörenden Personen sowie auch dem Umweltbewußtsein dieser Personen unterschiedlich sein. In vielen Haushalten werden bereits Glasgegenstände (Flaschen, Gläser etc.) sowie auch Papier und Pappabfälle nicht mehr dem Hausmüll zugegeben sondern an entsprechenden Sammelstellen abgegeben. Dennoch enthält der normale Hausmüll in der Regel noch Papier und Pappabfälle, Kunststoffe in Form von Behältern und Folien, Küchen- und Gartenabfälle, Textilien sowie Metall- und Glasabfälle.

Der Hausmüll wird bisher direkt den Deponien zugeführt oder an Müllverbrennungsanlagen geliefert. Bei Müllverbrennungsanlagen findet in der Regel eine Aussortierung von Metallen statt, wobei insbesondere Eisenmetalle magnetisch entfernt werden können. Für die Zwecke der vorliegenden Erfindung wird der Inhalt der Haushaltsmülltonnen gesammelt und von Metallen, insbesondere aber Eisen und Glas weitgehend befreit. "Weitgehend befreit" bedeutet hier, daß kleinere Mengen an Metallteilen, z.B. auch Metallfolien, Flaschenkapseln oder ähnliche kleine Stücke, noch in dem Hausmüll enthalten sein können. Auch Bruchglas kann noch in geringen Mengen in dem Hausmüll für die weitere Verarbeitung vorliegen.

Der von Glas und Metallen weitgehend befreite Hausmüll wird dann geshreddert. Im Shredder wird der Hausmüll auf eine Größe, die im Bereich von etwa 1 bis 10 mm liegt, zerkleinert. Die Zerkleinerung des Hausmülls im Shredder richtet sich nach der vorliegenden Zusammensetzung des Hausmülls und der vorhandenen Shredderanlage. Eine möglichst feine Zerteilung wird bevorzugt. Da Hausmüll jedoch von vorneherein auch schon sehr feine Materialien enthalten kann, z.B. Asche, liegt nach dem Shreddern ein breites Größenverteilungsspektrum der einzelnen Teilchen vor. Ein solches Spektrum ist für die spätere Brikettierung durchaus wünschenswert und vorteilhaft.

Der Zusatzstoff B enthält a) einen Spezialkalk T, enthaltend Calciumcarbonat und hexagonalen Kohlenstoff sowie b) Rückstandsprodukte aus der Zuckerindustrie.

Der Zuschlagstoff a) ist ein Spezialkalk T aus der chemischen Industrie. Dieser Spezialkalk enthält im wesentlichen Calciumcarbonat (etwa 85 %) sowie 9 bis 11 % hexagonalen Kohlenstoff. Ein solcher graphit- und kalkhaltiger Spezialkalk fällt z.B. bei der Kalkstickstoff-Herstellung in großen Mengen an und mußte bisher auf die Halde geworfen werden.

Als zweite Komponente (Komponente b) kommt ein Gemisch aus Rückstandsprodukten aus der Zuckerindustrie zur Verwendung, nämlich
(i) siruphaltige Melasse
(ii) Festsubstanz aus den Rübenreinigung sowie
(iii) Carboschlamm aus der Zuckerfertigung, und
(iv) aktive Aluminiumverbindung und gegebenenfalls
(v) aktives SiO₂.

Die siruphaltige Melasse (i) wirkt als Bindemittel und hat auch eine katalytische Wirkung beim Verbrennen und Einbinden der Schadstoffe.

Dabei erhöht die Komponente (ii) bei der späteren Verbrennung die Kristallisation der Schlacke und die Einbindung von Festschadstoffen.

Die Komponente (iii), die bis etwa 80 Gew.% schadstoffbindende Kalkanteile enthält, trägt auch bei der späteren Verbrennung bei.

Die Komponenten (iv) ist eine aktive Aluminiumverbindung, vorzugsweise Bentonit. Gegebenenfalls, also nicht unbedingt erforderlich, sind auch noch geringe Mengen an aktiver Kieselsäure (SiO₂) in der Komponente b) enthalten.

Die Gesamtmenge des Zusatzstoffes B) und auch die in dieser Gesamtmenge enthaltenen Anteile der Komponenten a) und b) richtet sich nach der Beschaffenheit des Mülls, wobei auch die Höhe der Feuchtigkeit zu berücksichtigen ist. Der Feuchtigkeitsgehalt bei Hausmüll kann sehr unterschiedlich sein und zwischen 20 und 70 %, im allgemeinen bei aber etwa 40 bis 50 % liegen. In Extremfällen können diese Werte unter- oder überschritten werden. Es ist vorteilhaft, aber nicht in allen Fällen erforderlich, eine Trocknungsstufe vorzusehen, in der man z.B. den Hausmüll nach der Aussortierung von Metall und Glasanteilen durch einen Trockenkanal schickt und dort auf einen Feuchtigkeitsgehalt von 20 bis unter 50 Gew.-% trocknet.

Der geshredderte und damit zerkleinerte Hausmüll verliert durch das Shreddern schon erheblich an Volumen. Aus 1 m³ Hausmüll erhält man beispielsweise nach dem Shreddern 0,4 m³ Müllschnitzel. Entsprechend erhöht sich auch das Durchschnittsgewicht des Hausmülls nach dem Shreddern.

Das Vermischen des Hausmülls mit den Zusatzstoffen erfolgt zweckmäßigerweise, in dem man die Zusatzstoffe nach dem Shreddern des Hausmülls zudosiert. Beispielsweise wird der geshredderte Hausmüll über ein Förderband in den Aufgabetrichter der Brikettiermaschine eingeführt und gleichzeitig wird in diesen Aufgabetrichter der Zusatzstoff zugegeben. Die Zusatzstoffe können aber auch schon vorher dem geshredderten Hausmüll in geeigneter Weise zugemischt werden. Es kann zweckmäßig sein, ist jedoch in vielen Fällen überhaupt nicht erforderlich, eine Mischvorrichtung, z.B. einen Trommelmischer, zum Abmischen der Zusatzstoffe mit dem geshredderten Hausmüll zu verwenden.

Wie schon dargelegt, ist das Verhältnis des Hausmülls A zu den Zusatzstoffen B variabel in Abhängigkeit von der Beschaffenheit des Hausmülls. Auch das Verhältnis der in dem Zusatzstoff enthaltenen Komponenten a) zu b) ist variabel. Im allgemeinen ist die Komponente (iii), also der Carboschlamm aus der Zuckerfertigung, in einem größeren Anteil enthalten als die übrigen Komponenten (i), (ii), (iv) und (v).

Insgesamt werden auf 100 Gew.-Teile Hausmüll A 3 bis 10 Gew.-Teile B, vorzugsweise ca. 6 Gew.-Teile, zugemischt. Dabei kann das Gewichtsverhältnis der Komponente a) zur Komponente b) etwa bei 30 : 70 bis 70 : 30 liegen.

Gemäß einer Ausführungsform liegen beispielsweise folgende Mischungen vor:

### I. Hausmüll A

Feuchtigkeitsgehalt 40 % (1000 Gew.-Teile Hausmüll)
30 Gew.-Teile a)
70 Gew.-Teile b) insgesamt,
nämlich 5 Gew.-Teile (i)
5 Gew.-Teile (ii)
52 Gew.-Teile (iii)
5 Gew.-Teile (iv)
3 Gew.-Teile (v)

### II. Für einen anderen Hausmüll mit einem Feuchtigkeitsgehalt von 20 % kann folgende Mischung vorliegen:

Hausmüll A
Feuchtigkeitsgehalt 20 % (1000 Gew.-Teile Hausmüll)
35 Gew.-Teile a)
65 Gew.-Teile b) insgesamt
nämlich 6 Gew.-Teile (i)
6 Gew.-Teile (ii)
47 Gew.-Teile (iii)
6 Gew.-Teile (iv)
Die Mischung aus Hausmüll A mit den Zusatzstoffen B wird nach dem Vermischen in an sich üblicher Weise brikettiert. Dabei werden auf üblichen Vorrichtungen die Müllbriketts unter hohem Druck gepreßt. Beispielsweise kann man hier eine Preßeinrichtung nehmen, in welcher zwei gegenläufige Schnecken vorliegen und mit einem Druck von 200 bis 300 bar gegen eine Matrize gepreßt wird. Die Matrize kann die übliche für die Brikettierung geeignete Form haben, d.h. daß man normale Briketts, Eierbriketts und dgl. hergestellen kann. Der Druck für das Verpressen zu Briketts ist variabel. Er hängt einerseits wiederum von der Zusammensetzung des Hausmülls ab, im besonderen Maß aber davon, ob die verpreßten Müllbriketts deponiert werden und deshalb bei der Lagerung selbst großen Drücken durch das Eigengewicht der angehäuften Briketts ausgesetzt sind, oder ob sie direkt oder nach nur einer kurzen Zwischenlagerung verfeuert werden. Ist eine sofortige Verfeuerung vorgesehen, so ist es ausreichend, daß der Druck beim Brikettieren nur so groß gewählt ist, daß der Zusammenhalt der Briketts gewahrt bleibt. Im allgemeinen beträgt der Druck 50 bis 350 bar.

Das erfindungsgemäße Verfahren zur Herstellung der Müllbriketts ist dadurch gekennzeichnet, daß man Hausmüll A von Glas und Metallen weitgehend befreit,
den von Glas und Metallen weitgehend befreiten Hausmüll shreddert,
vor oder nach dem Shreddern ggf. eine Teiltrocknung durchführt,
zu dem geshredderten Hausmüll einen Zusatzstoff B aus
a) Spezialkalk T, enthaltend Calciumcarbonat und hexagonalen Kohlenstoff sowie
b) Rückstandsprodukte aus der Zuckerindustrie, ausgewählt aus
   (i) sirupartiger Melasse
   (ii) Festsubstanz aus der Rübenreinigung,
   (iii) Carboschlamm aus der Zuckerfertigung, sowie
   (iv) aktive Aluminiumverbindung und ggf.
   (v) SiO₂
zugibt,
während der Zugabe von B zu A oder anschließend für eine gute Durchmischung von A und B sorgt und
die Mischung in üblichen Brikettiervorrichtungen unter Druck verpreßt.

Bei Verwendung einer Strangpresse werden die Briketts im Anschluß an das Verpressen durch Abschneiden von dem Strang auf eine geeignete Größe gebracht. Das Verpressen kann aber selbstverständlich auch, wie schon dargelegt, durch Einpressen in geeignete Matrizen erfolgen.

Bei der Brikettierung unter hohem Druck entsteht Preßwärme, die bereits einen chemischen Prozeß, ausgelöst durch die Zusatzstoffe mit den im Müll enthaltenen Stoffen ablaufen läßt. Dadurch erfolgt bereits eine Einbindung von Schadstoffen in die Briketts.

Die erfindungsgemäßen Müllbriketts sind selbst als Brennstoff geeignet. Sofern sie mit normalen Brennstoffen, beispielsweise Braun- oder Steinkohle, die auch in Brikettform vorliegen kann, verbrannt werden, ist es nicht erforderlich, die Müllbriketts zu zermahlen. Ein Zermahlen kann jedoch vorteilhaft bzw. zweckmäßig sein. Werden sie ohne oder nur mit geringen Mengen von anderen brennbaren Materialien als Brennstoff eingesetzt, so ist eine Zerkleinerung der Briketts erforderlich. Dabei reicht es aus wenn die Briketts auf Stückgrößen von etwa 1 bis 10 cm zerkleinert werden. Das Zerkleinern kann in üblichen Vorrichtungen, z.B. Shredder, Mahl- oder Brechwerken erfolgen. Wesentlich ist, daß die erfindungsgemäßen Müllbriketts durch die in ihnen enthaltenen Zusatzstoffe umweltfreundlich verbrennen. Werden die erfindungsgemäßen Müllbriketts zusammen mit normalen Brennstoffen wie Braun- oder Steinkohle verfeuert, so werden auch die in diesen herkömmlichen Brennstoffen enthaltenen Schadstoffe durch die in den erfindungsgemäßen Müllbriketts enthaltenen Zusatzstoffe beim Verbrennen in die Schlacke aufgenommen und darin eingebunden, wobei die Schlacke dann gut deponierfähig ist.

Die Müllbriketts können auch zusammen mit gut brennbaren Abfallstoffen, z. B. Teppichresten, zusammen verbrannt werden. Dadurch wird die Verbrennung insgesamt erleichtert. Werden solche weiteren gut brennbaren Abfallstoffe zugemischt, so kann es zweckmäßig sein, den Anteil an der Zusatzkomponente B insgesamt etwas zu erhöhen, um auch die durch die Verbrennung der weiteren zugegebenen gut brennbaren Stoffe entstehenden Schadstoffe in die Schlacke einzubinden.

Das folgende Beispiel beschreibt eine Ausführungsform der Erfindung. Dabei sind alle Teile und Prozente auf das Gewicht bezogen.

### Beispiel 1

Ein typischer Hausmüll, der beim Leeren von Mülltonnen angefallen ist, bestand im wesentlichen aus Papier, Textilien, Küchenabfällen, Plastikmaterialien, Glas und Metallabfällen, insbesondere Eisen. Insgesamt hatte der eingesetzte Müll ein Volumen von 110 m³ und ein Gewicht von 17.000 kg. Der durchschnittliche Feuchtigkeitsgehalt des Mülls betrug 45 %. Eisen und Glas wurden manuell aussortiert.

Eine Trocknung des Hausmülls ist hier nicht unbedingt erforderlich. Es kann jedoch zweckmäßig sein, das Material durch einen Trockenkanal mit einer Länge von etwa 10 m, der mit Heißluft auf eine Temperatur von ca. 80°C geheizt wird, auf einen Feuchtigkeitsgehalt von ca. 35 % zu trocknen, wobei die Heißluft aus der bei der Brikettierung entstehenden Wärme gewonnen werden kann. Dann wurde der Hausmüll weiter auf einem Förderband einer Shredderanlage zugeführt, in welcher der Müll auf eine Größe von ca. 1 bis 8 cm zerkleinert wurde. In den Einfülltrichter der Shredderanlage wurde gleichzeitig eine Mischung aus dem Zusatzstoff B dem Müll so zudosiert, daß der Anteil an Zusatzstoff B in der Mischung insgesamt 6 bis 10 Gew.-% betrug. Die Zusammensetzung des Zusatzstoffes B wurde dabei entsprechend der vorhergehenden Rezeptur für den Hausmüll A mit einem Feuchtigkeitsgehalt von 40 % gewählt. Wird die Trocknung bis zu einem Feuchtigkeitsgehalt von 20 % vorgenommen, dann ist es zweckmäßig, die Rezeptur II für den Hausmüll mit einem Feuchtigkeitsgehalt von 20 % zu wählen.

Das gut durchmischte Gemisch aus dem geshredderten Müll mit dem Zusatzstoff B wurde dann einer Brikettiermaschine zugeführt, in welcher das Gemisch mit einem Druck von 300 bar zu einem Strang verfestigt wurde, der auf Brikettgrößen in der Größe von normalen Haushaltbriketts abgeschnitten wurde.

Die so erhaltenen Briketts aus Müll konnten auf einem großen Haufen gelagert werden, ohne daß die Briketts unter dem Druck der darüberliegenden Briketts zerbröckelten. Sie konnten auch ohne Zerbröckeln auf Lastkraftwagen verladen und einer Deponie zugeführt werden.

Ein Teil dieser Müllbriketts wurde einer Feuerungsanlage, die normalerweise mit Steinkohle befeuert wurde, zugeführt und dort in einer Menge von etwa 10 Gew.-%, bezogen auf das Gesamtgewicht der dort verfeuerten Steinkohle, in das Glutbett des Ofens eingegeben. Es wurde festgestellt, daß die Meßwerte der dem Kamin entnommenen Abgase hinsichtlich SO₂, Cl₂ und NOₓ wesentlich verbessert waren und im Grenzbereich der für die BRD gesetzlichen Anforderungen lagen, während diese Meßwerte, die zuvor, ohne Zugabe der erfindungsgemäßen Briketts gemessen wurden, außerhalb der gesetzlichen Anforderungen lagen. Die bei der Verbrennung anfallende Schlacke war gut deponierfähig.

## Patentansprüche

1. Müllbrikett aus
A Hausmüll und
B Zusatzstoffen,
dadurch gekennzeichnet, daß es aufgebaut ist aus
A) von Glas und Metallen weitgehend befreitem, geshreddeten Hausmüll,
B) einem Zusatzstoff aus
a) Spezialkalk T, enthaltend Calciumcarbonat und hexagonalen Kohlenstoff sowie
b) Rückstandsprodukte aus der Zuckerindustrie, ausgewählt aus
(i) sirupartiger Melasse
(ii) Festsubstanz aus der Rübenreinigung,
(iii) Carboschlamm aus der Zuckerfertigung, sowie
(iv) aktive Aluminiumverbindung und gegebenenfalls
(v) aktives SiO₂,
wobei A und B in Mischung vorliegen und zu Briketts verpreßt sind.

2. Müllbrikett gemäß Anspruch 1,
dadurch gekennzeichnet, daß pro 100 Gew.-Teile Hausmüll A 3 bis 10 Gew.-Teile Zusatzstoffe B enthalten sind.

3. Müllbrikett gemäß einem der vorhergehenden Ansprüche, dadurch gekennzeichnet, daß in dem Zusatzstoff B das Gewichtsverhältnis von a) zu b) etwa 30 : 70 bis 70 : 30 beträgt.

4. Müllbrikett gemäß einem oder mehreren der vorhergehenden Ansprüche,
dadurch gekennzeichnet, daß es unter einem ausreichenden Druck von 300 bis 500 bar verpreßt wurde, um es deponierfähig zu machen.

5. Verfahren zur Herstellung eines Müllbriketts gemäß Anspruch 1,
dadurch gekennzeichnet, daß man A Hausmüll von Glas und Metallen weitgehend befreit,
den von Glas und Metallen weitgehend befreiten Hausmüll shreddert,
vor oder nach dem Shreddern ggf. eine Teiltrocknung durchführt,
zu dem geshredderten Hausmüll einen Zusatzstoff B aus
a) Spezialkalk T, enthaltend Calciumcarbonat und hexagonalen Kohlenstoff sowie
b) Rückstandsprodukte aus der Zuckerindustrie, ausgewählt aus
(i) sirupartiger Melasse
(ii) Festsubstanz aus der Rübenreinigung,
(iii) Carboschlamm aus der Zuckerfertigung, sowie
(iv) aktive Aluminiumverbindung und gegebenenfalls
(v) aktives SiO₂
zugibt,
während der Zugabe von B zu A oder anschließend für eine gute Durchmischung von A und B sorgt und
die Mischung in üblichen Brikettiervorrichtungen unter Druck verpreßt.

6. Verfahren gemäß Anspruch 5,
dadurch gekennzeichnet, daß man vor dem Verpressen die Mischung aus Hausmüll A und Zusatzstoffen B auf einen Feuchtigkeitsgehalt von 20 bis unter 50 Gew.-% trocknet.

7. Verfahren gemäß Anspruch 5,
dadurch gekennzeichnet, daß man zum Brikettieren die Mischung aus A und B mit einem Druck zwischen 50 und 350 bar verpreßt.

8. Verfahren gemäß Anspruch 5,
dadurch gekennzeichnet, daß man zu 100 Gew.-Teilen Hausmüll A 6 bis 10 Gew.-Teile Zusatzstoffe B gibt.

9. Verfahren gemäß Anspruch 5,
dadurch gekennzeichnet, daß in dem Zusatzstoff B das Gewichtsverhältnis von a) zu b) etwa 30 : 70 bis 70 : 30 beträgt.

10. Verwendung eines Müllbriketts gemäß Ansprüchen 1 bis 5 oder hergestellt nach den Ansprüchen 6 bis 9 als Brennmaterial.

## Claims

1. Refuse briquette consisting of
A household refuse and
B additives,
characterised in that it is made up of
A) household refuse largely rid of glass and metals and shredded,
B) an additive B consisting of
a) a special lime T, containing calcium carbonate and hexagonal carbon, as well as
b) residual products from the sugar industry, selected from
(i) syrup-like molasses
(ii) solid matter from beet cleaning,
(iii) carbosludge from sugar production, as well as
(iv) active aluminium compound and if occasion arises
(v) active SiO₂,
wherein A and B are present in a mixture and are pressed into briquettes.

2. Refuse briquette according to claim 1, characterised in that 3 to 10 parts by weight additives B are contained per 100 parts by weight household refuse A.

3. Refuse briquette according to any of the preceding claims, characterised in that in the additive B the weight ratio of a) to b) is about 30:70 to 70:30.

4. Refuse briquette according to one or more of the preceding claims, characterised in that it was pressed at an adequate pressure of 300 to 500 bars to make it dumpable.

5. Method for the manufacture of a refuse briquette according to claim 1, characterised in that A household refuse is largely rid of glass and metals, the household refuse largely rid of glass and metals is shredded, if occasion arises partial drying is carried out before or after shredding, an additive B consisting of
a) special lime T, containing calcium carbonate and hexagonal carbon, as well as
b) residual products from the sugar industry, selected from
(i) syrup-like molasses
(ii) solid matter from beet cleaning,
(iii) carbosludge from sugar production, as well as
(iv) active aluminium compound and if occasion arises
(v) active SiO₂
is added to the shredded household refuse, thorough mixing of A and B is ensured during the addition of B to A or subsequently, and the mixture is pressed in ordinary briquetting apparatuses at pressure.

6. Method according to claim 5, characterised in that before pressing, the mixture of household refuse A and additives B is dried to a moisture content from 20 to below 50 wt.%.

7. Method according to claim 5, characterised in that for briquetting, the mixture of A and B is pressed at a pressure between 50 and 350 bars.

8. Method according to claim 5, characterised in that 6 to 10 parts by weight additives B are added to 100 parts by weight household refuse A.

9. Method according to claim 5, characterised in that in the additive B the weight ratio of a) to b) is about 30:70 to 70:30.

10. Use of a refuse briquette according to claims 1 to 5 or manufactured according to claims 6 to 9 as fuel.

## Revendications

1. Briquette de déchets coposée de :
A déchets domestiques et
B substances additionnelles,
caractérisée en ce qu'elle est composée :
A) de déchets domestiques broyés, largement débarrassés du verre et des métaux,
B) d'une substance additionnelle composée de
a) chaux spéciale T, contenant du carbonate de calcium. et du carbone hexagonal, ainsi que
b) des résidus issus de la fabrication du sucre, choisis parmi :
(i) une mélasse sirupeuse
(ii) une substance solide issue du nettoyage des betteraves
(iii) une boue carbonée issue de la fabrication du sucre ainsi que
(iv) un composé actif d'aluminium et, le cas échéant,
(v) de la SiO₂ active,
où A et B se présentent sous forme de mélange et sont comprimés en briquettes.

2. Briquette de déchets selon la revendication 1, caractérisée en ce que, pour 100 parties en poids de déchets domestiques A, il est contenu de 3 à 10 parties en poids du substances additives B.

3. Briquette de déchets selon l'une des revendications précédentes, caractérisée en ce que le rapport des poids entre a) et b) dans la substance additive B est d'à peu prés 30 : 70 à 70 : 30.

4. Briquetts de déchets selon l'une ou plusieurs des revendications précédentes, caractérisée en ce qu'elle est comprimée à une pression suffisante, de 300 à 500 bar, pour pouvoir être mise en stockage.

5. Procédé de fabrication d'une briquette de déchets selon. la revendication 1, caractérisé on ce que l'on débarrasse largement les déchets domestiques A du verre et des métaux,
on broie les déchets domestiques largement débarrassés du verre et des métaux,
on effectue, avant ou après broyage, le cas échéant, un séchage partiel,
on ajoute aux déchets domestiques broyés un additif B composé de :
a) chaux spéciale T, contenant du carbonate de calcium et du carbone hexagonal, ainsi que
b) des résidus issus de la fabrication du sucre, choisis parmi :
(i) une mélasse sirupeuse
(ii) une substance solide issue du nettoyage des betteraves
(iii) une boue carbonée issue de la fabrication du sucre ainsi que
(iv) un composé actif d'aluminium et, le cas échéant,
(v) de la SiO₂ active,
pendant l'apport de B à A ou bien ensuite, on assure un bon mélange intime de A et B, et l'on comprime le mélange sous pression dans des dispositifs de briquetage usuels.

6. Procédé selon la revendicition 5, caractérisé en ce qu'avant la compression, le mélange composé de déchets domestiques A et d'additifs B est séché jusqu'à atteindre une humidité de 20 % à moins de 50 % en poids.

7. Procédé selon la revendication 5, caractérisé en ce: que, pour briqueter, on comprime le mélange composé de A et B à une pression située entre 50 et 350 bar.

8. Procédé selon la revendication 5, caractérisé en ce qu'on ajoute à 100 parties en poids de déchets domestiques A de 6 à 10 parties en poids d'additifs B.

9. Procédé selon la revendication 5, caractérisé en ce que, dans l'additif B, la part en poids de a par rapport à b est d'à peu près 30 : 70 à 10 : 30.

10. Utilisation d'une briquette de déchet selon les revendications 1 à 5 ou fabriquée selon les revendications 6 à 9, comme matériau combustible.
